# EUROPÄISCHE PATENTSCHRIFT

(11) **EP 1 794 949 B1**
(45) Veröffentlichungstag und Bekanntmachung des Hinweises auf die Patenterteilung: **07.05.2008**
(21) Anmeldenummer: 05797082.4
(22) Anmeldetag: 22.09.2005
(51) Int. Cl.: H04L 12/56

(54) **VERFAHREN ZUM VERTEILEN VON SOFTWARE UND KONFIGURATIONSDATEN SOWIE ENTSPRECHENDES DATENNETZ**
METHOD FOR THE DISTRIBUTION OF SOFTWARE AND CONFIGURATION DATA, AND CORRESPONDING DATA NETWORK
PROCEDE DE DISTRIBUTION D'UN LOGICIEL ET DE DONNEES DE CONFIGURATION ET RESEAU DE DONNEES CORRESPONDANT

(30) Priorität: 29.09.2004 DE 102004047371
(43) Veröffentlichungstag der Anmeldung: 13.06.2007
(73) Patentinhaber: Siemens Enterprise Communications GmbH & Co. KG, 81379 München (DE)
(72) Erfinder: BITTERLICH, Jean-Yves, 81549 München (DE)
(86) Internationale Anmeldenummer: PCT/EP2005/054749
(87) Internationale Veröffentlichungsnummer: WO 2006/034990

(56) Entgegenhaltungen:
- WO-A-99/65201
- WO-A-02/052787
- SEUNG-SEOK KANG ET AL: "Efficient mobile access to internet data via a wireless peer-to-peer network" PERVASIVE COMPUTING AND COMMUNICATIONS, 2004. PROCEEDINGS OF THE SECOND IEEE ANNUAL CONFERENCE ON MAR. 14-17, 2004, PISCATAWAY, NJ, USA,IEEE, 14. März 2004 (2004-03-14), Seiten 197-205, XP010689683 ISBN: 0-7695-2090-1

## Beschreibung

Die vorliegende Erfindung betrifft ein Verfahren zum Verteilen von Software und/oder Konfigurationsdaten in einem Datennetz mit mehreren Teilnehmern, die ad hoc-netzwerkfähig sind. Darüber hinaus betrifft die vorliegende Erfindung ein entsprechendes Datennetz mit ad hoc-netzwerkfähigen Teilnehmern und einer Zentraleinrichtung zum Verteilen der Software bzw. Konfigurationsdaten.

Die Software-Verwaltung spielt eine zentrale Rolle bei jedem Mobilfunknetzbetreiber bzw. Netzwerk-Operator. Bei mehreren Millionen Teilnehmern sehen sich die Betreiber bzw. Operatoren einem enormen Problem gegenüber: Das Ändern und Aktualisieren von Konfigurationen soll bei allen Terminals gleichzeitig oder in einem überschaubaren zeitlichen Rahmen erfolgen können. Während sich die Standardisierungsgremien darauf konzentrieren, wie das Aktualisieren und Ändern der Konfigurationen auf der Netzwerkseite zu managen und auf der Terminalseite durchzuführen ist, wird grundsätzlich offen gelassen, wie die Betreiber und Operatoren die Vielzahl an Triggern und Verbindungen für die Aktualisierungen und Änderungen handhaben sollen.

In "Efficient mobile access to internet data via wireless peer-to peer network", Pervsive Computing and communications, 2004, Proceedings of the second IEEE Annual Conference on March 14-17, 2004, XP-A-10689683, ist eine Netzstruktur beschrieben, bei der von einem Content Provider im Internet Files bzw. Dateien, z.B. name programms, MP3 Files oder Movie Clips über ihre ISP's und anschließend über 3G Verbindungen an die mobilen Endgeräte übertragen werden. Hierbei wird die jeweilige Datei in Teildateien aufgeteilt und jede der Teildateien wird an ein zugeordnetes mobiles Endgerät übertragen. Desweiteren sind die mobilen Endgeräte so konstruiert, dass sie über ein Ad Hoc Netzwerk die jeweils verbleibenden Teildateinen vermitteln können. Hierzu sind Server zwischen dem Internet und dem Ad Hoc Netz vorgesehen, in denen die Verteilung der Teildaten im Ad Hoc Netzwerk gesteuert wird.

In der WO-A-02/052787 ist eine Einrichtung und ein Verfahren für eine Übertragung einer in n Segmente zerlegten Nachricht und die Wiederzusammensetzung der Nachricht von einer Einrichtung zu einer anderen Einrichtung über ein Netzwerk beschrieben. Hierbei sind den n Segmenten n Identifier zugeordnet, wobei jedes Segment mit dem zugeordneten Identifier an die andere Einrichtung übertragen wird. Die Zusammensetzung der Nachricht wird mit Hilfe der n Idetifier durchgeführt.

Die Aufgabe der vorliegenden Erfindung besteht somit darin, ein Verfahren bereitzustellen, mit dem eine Aktualisierung bzw. Änderung der Konfigurationen einer Vielzahl von Terminals einfacher durchgeführt werden kann. Darüber hinaus soll ein entsprechendes Datennetz angegeben werden.

Erfindungsgemäß wird diese Aufgabe gelöst durch ein Verfahren zum Verteilen von Software und/oder Konfigurationsdaten in einem Datennetz mit mehreren Teilnehmern, die ad hoc-netzwerkfähig sind, durch Aufteilen der zu verteilenden Software und/oder Konfigurationsdaten in einen ersten und mindestens einen zweiten Datenblock, Erstellens einer Liste, die einen vollständigen Satz an Datenblöcken, der sich bei dem Aufteilen ergibt, wiederspiegelt, Senden des ersten Datenblocks zusammen mit der Liste von einer Zentralstelle an einen ersten der mehreren Teilnehmer und des mindestens zweiten Datenblocks zusammen mit der Liste ebenfalls von der Zentralstelle an einen zweiten der mehreren Teilnehmer, Aufbauen einer spontanen Kommunikation zwischen dem ersten und zweiten Teilnehmer und Senden des zweiten Datenblocks zusammen mit der Liste von dem zweiten Teilnehmer an den ersten Teilnehmer.

Darüber hinaus ist erfindungsgemäß vorgesehen ein Datennetz mit mindestens einem ersten und einem zweiten Teilnehmer, die ad hoc-netzwerkfähig sind, und einer Zentraleinrichtung zum Verteilen von Software und/oder Konfigurationsdaten, wobei die zu verteilende Software und/oder Konfigurationsdaten in mindestens einem ersten und einem zweiten Datenblock vorliegen, eine Liste in der Zentraleinrichtung erstellt wird, die einen vollständigen Satz an Datenblöcken, der sich bei dem Aufteilen ergibt, wiederspiegelt, von der Zentraleinrichtung der erste Datenblock zusammen mit der Liste an den ersten Teilnehmer und der zweite Datenblock zusammen mit der Liste an den zweiten Teilnehmer übertragbar ist, zwischen dem ersten und zweiten Teilnehmer eine spontane Kommunikation aufbaubar ist und der zweite Datenblock zusammen mit der Liste direkt von dem zweiten Teilnehmer an den ersten Teilnehmer übertragbar ist.

In vorteilhafter Weise ist es damit möglich, dass die Betreiber und Operatoren nicht mehr alle Geräte bzw. Teilnehmer für die Aktualisierungen und Änderungen der Konfigurationen bzw. Software triggern müssen. Sie müssen lediglich einer Untermenge von Teilnehmern Software oder Konfigurationsdaten zusenden. Dies erspart Energie und Bandbreite und mithin Geld. Speziell kann durch die Aufteilung der zu übertragenden Konfigurationsdaten in Datenblöcke etwa ein Drittel der Verteilungskosten eingespart werden gegenüber einer Standard P2P (Peer-to-Peer)-Software-Verteilung.

Das Senden des zweiten Datenblocks durch den zweiten Teilnehmer kann auf Anforderung des ersten Teilnehmers erfolgen. Dabei ist der erste Teilnehmer, dem der zweite Datenblock noch fehlt, der aktive Part. Besonders effizient ist es hierfür, wenn der erste Teilnehmer seine Anforderung aufgrund der Liste, die er von der Zentralstelle erhalten hat, an die Teilnehmer stellt, die mit ihm ein ad hoc-Netzwerk bilden.

Das Senden des zweiten Datenblocks kann aber auch automatisch durch den zweiten Teilnehmer erfolgen, wenn er mit dem ersten Teilnehmer die spontane Kommunikation bzw. das ad hoc-Netzwerk aufbaut. Dies bedeutet, dass in diesem Fall der zweite Teilnehmer der aktive Part ist und der erste Teilnehmer lediglich zu entscheiden hat, ob er über den zweiten Datenblock bereits verfügt und ihn gegebenenfalls verwirft.

Sobald einer der mehreren Teilnehmer über einen vollständigen Satz Datenblöcke verfügt, kann bei ihm eine Installation oder ein Setup gestartet werden. Ob der Satz Datenblöcke vollständig ist oder nicht, kann der Teilnehmer anhand der von der Zentralstelle übermittelten Liste selbst feststellen.

Die spontane Kommunikation kann mittels Bluetooth oder WLAN aufgebaut werden. Somit kann auf bekannte Standards zurückgegriffen werden.

Die vorliegende Erfindung wird nun anhand der beigefügten Zeichnungen näher erläutert, die ein erfindungsgemäßes Datennetz prinzipiell wiederspiegelt.

Das nachfolgend näher geschilderte Ausführungsbeispiel stellt eine bevorzugte Ausführungsform der vorliegenden Erfindung dar.

Die erfindungsgemäße Lösung basiert auf einem P2P-Software-Management-Verteilungs-Prinzip mit Teilzustellung. Dabei werden große Datenmengen, die für die Aktualisierung oder Änderung der Software bzw. Konfiguration notwendig sind, in Blöcke geteilt, welche dann an "ausgewählte" Geräte gesendet werden. Hierzu wird jeweils nur ein Datenblock an ein Gerät gesendet.

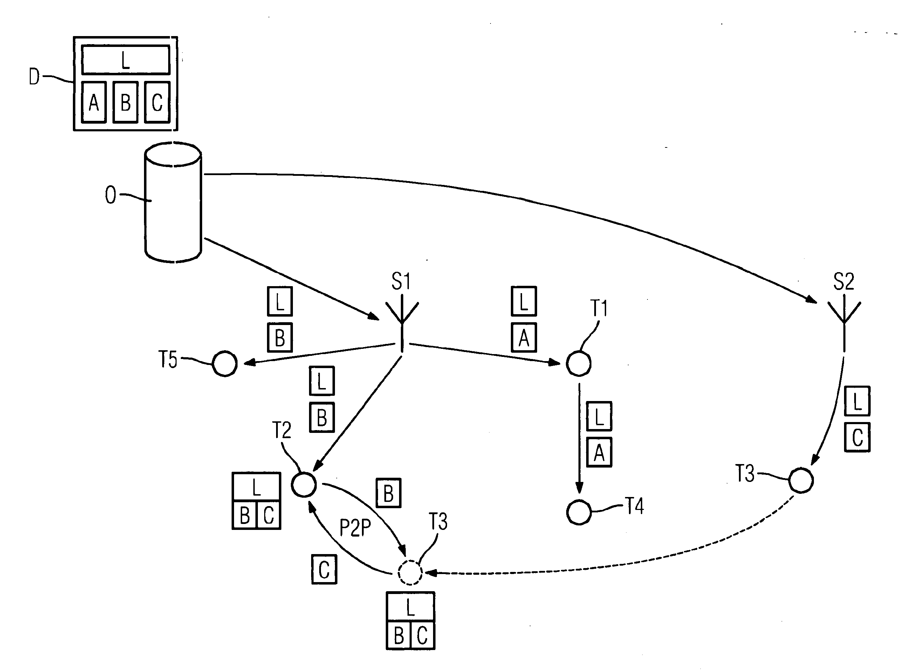

In dem Beispiel von FIG 1 stellt der Operator O einen Datensatz D zur Verfügung, mit dem die Teilnehmer T1, T2 und T3 eines Mobilfunknetzes neu konfiguriert werden sollen. Dabei sind die Daten des Datensatzes D in Blöcke A, B und C unterteilt. Ferner besitzt der Datensatz D eine Liste L, die ein Skript über sämtliche von den Teilnehmern zu erhaltenden Datenblöcke A, B und C enthält.

Der Operator O sendet nun die einzelnen Datenblöcke A, B und C über Sendestationen S1 und S2 an die Teilnehmer T1, T2 und T3. Auch der Teilnehmer T5 wird von der Sendestation S1 beschickt.

Im konkreten Beispiel sendet die Sendestation S1 einen Datenblock A einschließlich der Liste L an den Teilnehmer T1. Des Weiteren sendet die Sendestation S1 einen Datenblock B einschließlich Liste L an einen Teilnehmer T2. Die andere Sendestation S2 sendet einen Datenblock C einschließlich Liste L an einen Teilnehmer T3. Die Begrenzung auf wenige Teilnehmer und Sendestationen ist hier rein willkürlich gewählt. Grundsätzlich kann die Anzahl an Sendestationen und Teilnehmern beliebig hoch gewählt werden.

Weiterhin überträgt die Sendestation S1 auch an einen Teilnehmer T5 den Datenblock B einschließlich Liste L. Über spontane Kommunikation sendet auch der Teilnehmer T1 den von der Sendestation S1 erhaltenen Datenblock A mit Liste L weiter an einen Teilnehmer T4. Auf diese Weise können die Daten nicht nur über die Sendestationen S1 und S2, sondern auch ähnlich dem Verbreitungsprinzip von Viren unter den Teilnehmern selbst weitertransportiert werden.

Da die Teilnehmer, die neue Daten erhalten haben, auch eine Liste L erhielten, die über sämtliche notwendigen Datenblöcke informiert, wissen die Teilnehmer auch, welche Datenblöcke ihnen noch fehlen. Um jedoch das Datennetz nicht unnötig mit der Weitergabe von Konfigurationsdaten zu belegen, ist erfindungsgemäß ein zusätzlicher Verbreitungsmechanismus vorgesehen. Wenn sich nämlich ein Teilnehmer auf einen anderen zu bewegt (im Beispiel der FIG bewegt sich der Teilnehmer T3 auf den Teilnehmer T2 zu) können beide, wenn sie sich entsprechend nahe sind, ein ad hoc-Netzwerk bzw. eine P2P-Verbindung über Bluetooth oder WLAN aufbauen. Über diese Kommunikationsverbindung lassen sich dann die Konfigurationsdatenblöcke austauschen. Im vorliegenden Fall sendet der Teilnehmer T2 an den Teilnehmer T3 den Datenblock B und der Teilnehmer T3 an den Teilnehmer T2 den Datenblock C. Dies geschieht entweder dadurch, dass der Teilnehmer T3 automatisch den Datenblock C abschickt, wenn eine P2P-Verbindung mit einem anderen Teilnehmer aufgebaut ist. In gleicher Weise könnte der Teilnehmer T2 automatisch den Datenblock B abschicken, wenn mit einem anderen Teilnehmer diese P2P-Verbindung aufgebaut ist.

Alternativ kann jeder Teilnehmer die Liste L ausnutzen, da er mit ihr weiß, welche Datenblöcke ihm für den vollständigen Konfigurationsdatensatz noch fehlen. Im vorliegenden Beispiel hieße dies, dass der Teilnehmer T2 beim Teilnehmer T3 anfragt, ob er über den Datenblock A oder C verfügt. Da der Teilnehmer T3 den Datenblock C besitzt, sendet dieser den Datenblock C an den Teilnehmer T2. Gleiches gilt für die Übertragung des Datenblocks B vom Teilnehmer T2 an den Teilnehmer T3. Letztlich verfügen beiden Teilnehmer T2 und T3 jeweils über beide Datenblöcke B und C. Es ist dann lediglich abzuwarten, bis einer der beiden Teilnehmer T2 und T3 beispielsweise mit dem Teilnehmer T1 oder T4 in Berührung kommen, so dass er den restlichen Datenblock A erhalten kann.

Durch diese virenartige Verbreitung von Datenblöcken für die Konfiguration oder sonstige Softwareaktualisierung wird das Datennetz weniger belastet, so dass weniger Bandbreite für das Software-Management notwendig ist. Die Übertragung der Datenblöcke wird vielmehr durch ad hoc-Verbindungen zwischen den Geräten gewährleistet. Dieses Prinzip ist besonders für große zu verteilende Datenmengen wirtschaftlich interessant.

### Bezugszeichenliste

- A, B, C: Datenblöcke
- D: Datensatz
- L: Liste
- O: Operator
- P2P: Peer-to-Peer-Verbindung
- S1, S2: Sendestationen
- T1, T2, T3, T4, T5: Teilnehmer

## Patentansprüche

1. Verfahren zum Verteilen von Software und/oder Konfigurationsdaten in einem Datennetz mit mehreren Teilnehmern (T1 bis T5), die ad hoc-netzwerkfähig sind, **gekennzeichnet durch**
- Aufteilen der zu verteilenden Software und/oder Konfigurationsdaten in einen ersten und mindestens einen zweiten Datenblock (B, C),
- Erstellens einer Liste (L), die einen vollständigen Satz an Datenblöcken, der sich bei dem Aufteilen ergibt, wiederspiegelt,
- Senden des ersten Datenblocks (B) zusammen mit der Liste (L) von einer Zentralstelle (O) an einen ersten (T2) der mehreren Teilnehmer und des mindestens zweiten Datenblocks (C) zusammen mit der Liste (L) ebenfalls von der Zentralstelle (O) an einen zweiten (T3) der mehreren Teilnehmer,
- Aufbauen einer spontanen Kommunikation (P2P) zwischen dem ersten (T2) und zweiten Teilnehmer (T3) und
- Senden des zweiten Datenblocks (C) zusammen mit der Liste (L) von dem zweiten Teilnehmer (T3) an den ersten Teilnehmer (T2).

2. Verfahren nach Anspruch 1, wobei das Senden des zweiten Datenblocks (C) auf Anforderung des ersten Teilnehmers (T2) erfolgt.

3. Verfahren nach Anspruch 2, wobei die Anforderung aufgrund der Liste (L) erfolgt.

4. Verfahren nach Anspruch 1, wobei das Senden des zweiten Datenblocks (C) automatisch durch den zweiten Teilnehmer (T3) erfolgt, wenn er mit dem ersten Teilnehmer (T2) die spontane Kommunikation (P2P) aufbaut.

5. Verfahren nach einem der vorhergehenden Ansprüche mit dem weiteren Schritt des Startens einer Installation oder eines Setups, wenn einer der mehreren Teilnehmer über einen vollständigen Satz Datenblöcke (A, B, C) verfügt.

6. Verfahren nach einem der vorhergehenden Ansprüche, wobei die spontane Kommunikation (P2P) mittels Bluetooth oder WLAN aufgebaut wird.

7. Datennetz mit
- mindestens einem ersten (T2) und einem zweiten Teilnehmer (T3), die ad hoc-netzwerkfähig sind, und
- einer Zentraleinrichtung (O) zum Verteilen von Software und/oder Konfigurationsdaten,
**dadurch gekennzeichnet, dass**
- die zu verteilende Software und/oder Konfigurationsdaten in mindestens einem ersten (B) und einem zweiten Datenblock (C) vorliegen,
- eine Liste (L) in der Zentraleinrichtung (O) erstellt wird, die einen vollständigen Satz an Datenblöcken (A, B, C), der sich bei dem Aufteilen ergibt, wiederspiegelt,
- von der Zentraleinrichtung (O) der erste Datenblock (B) zusammen mit der Liste (L) an den ersten (T2) Teilnehmer und der zweite Datenblock (C) zusammen mit der Liste (L) an den zweiten Teilnehmer (T3) übertragbar ist,
- zwischen dem ersten und zweiten Teilnehmer (T2, T3) eine spontane Kommunikation (P2P) aufbaubar ist und
- der zweite Datenblock (C) zusammen mit der Liste (L) direkt von dem zweiten Teilnehmer (T3) an den ersten Teilnehmer (T2) übertragbar ist.

8. Datennetz nach Anspruch 7, wobei der zweite Datenblock (C) von dem zweiten Teilnehmer (T3) an den ersten Teilnehmer (T2) auf dessen Anforderung hin übertragbar ist.

9. Datennetz nach Anspruch 8, wobei in dem ersten Teilnehmer T2) die Liste (L) für die Anforderung auswertbar ist.

10. Datennetz nach Anspruch 7, wobei der zweite Datenblock (C) automatisch durch den zweiten Teilnehmer (T3) an den ersten Teilnehmer (T2) übertragbar ist, wenn die beiden Teilnehmer (T2, T3) eine spontane Kommunikation (P2P) aufbauen..

11. Datennetz nach einem der Ansprüche 7 bis 10, wobei in einem der Teilnehmer eine Installation oder ein Setup automatisch startbar ist, wenn der Teilnehmer über einen vollständigen Satz Datenblöcke (A, B, C) verfügt.

12. Datennetz nach einem der Ansprüche 7 bis 11, wobei die spontane Kommunikation (P2P) zwischen den Teilnehmern mittels Bluetooth oder WLAN aufbaubar ist.

## Claims

1. Method for distributing software and/or configuration data in a data network with a number of users (T1 to T5) who have ad hoc-networking capabilities,
**characterised by**
- Division of the software and/or configuration data to be distributed into at least a first and at least one second data block (B, C),
- Creation of a list (L) which reflects a complete set of data blocks produced during the division of the data,
- Sending of the first data block (B) together with the list (L) from a central location (O) to a first (T2) of the number of users and the second data block (C) together with the list (L) likewise from the central location (O) to a second (T3) of the number of users,
- Establishing spontaneous communication (P2P) between the first (T2) and second user (T3) and
- Sending the second data block (C) together with the list (L) from the second user (T3) to the first user (T2).

2. Method according to claim 1, with the second data block (C) being transmitted at the request of the first user (T2).

3. Method according to claim 2, with the request being made on the basis of the list (L).

4. Method according to claim 1, with the second data block (C) being sent automatically by the second user (T3) when they establish spontaneous communication (P2P) with the first user (T2).

5. Method according to one of the previous claims, with the further step of starting an installation or a setup when one of the number of users has a complete set of data blocks (A, B, C) available to them.

6. Method according to one of the previous claims, with the spontaneous communication (P2P) being set up using Bluetooth or WLAN.

7. Data network with
- at least a first (T2) and a second user (T3) who have ad-hoc networking capabilities, and
- a central device (0) for distributing software and/or configuration data,
**characterised in that**,
- the software and/or configuration data to be distributed is available in at least a first (B) and a second data block (C),
- a list (L) is created in the central device which reflects a complete set of data blocks (A, B, C) produced during the division of the data,
- the first data block (B) is able to be transmitted together with the list (L) from the central device (O) to the first (T2) user and the second data block (C) together with the list (L) to the second user (T3),
- spontaneous communication (P2P) is able to be established between the first and second user (T2, T3), and
- the second data block (C) is able to be transmitted together with the list (L) directly from the second user (T3) to the first user (T2).

8. Data network according to claim 7, with the second data block (C) being able to be transmitted from the second user (T3) to the first user (T2) at the latter's request.

9. Data network according to claim 8, with the list (L) being able to be evaluated for the request in the first user (T2).

10. Data network according to claim 7, with the second data block (C) being transmitted automatically by the second user (T3) to the first user (T2) if the two users (T2, T3) establish spontaneous communication (P2P).

11. Data network according to one of the claims 7 to 10, with an installation or a setup able to be started automatically in one of the users when the user has a complete set of data blocks (A, B, C) available.

12. Data network according to one of the claims 7 to 11, with the spontaneous communication (P2P) between the users being able to be established using Bluetooth or WLAN.

## Revendications

1. Procédé de distribution d'un logiciel et/ou de données de configuration dans un réseau de données comprenant plusieurs abonnés (T1 à T5) capables de former un réseau ad hoc, **caractérisé par**
- la division du logiciel et/ou des données de configuration à distribuer en un premier et au moins un deuxième blocs de données (B, C),
- l'établissement d'une liste (L) qui reflète un ensemble complet de blocs de données résultant de la division,
- l'envoi du premier bloc de données (B) avec la liste (L) d'une station centrale (O) à un premier (T2) des plusieurs abonnés et du au moins deuxième bloc de données (C) avec la liste (L) également de la station centrale (O) à un deuxième (T3) des plusieurs abonnés,
- l'établissement d'une communication spontanée (P2P) entre le premier (T2) et le deuxième (T3) abonnés et
- l'envoi du deuxième bloc de données (C) avec la liste (L) du deuxième abonné (T3) au premier abonné (T2).

2. Procédé selon la revendication 1, l'envoi du deuxième bloc de données (C) s'effectuant sur demande du premier abonné (T2).

3. Procédé selon la revendication 2, la demande se faisant sur la base de la liste (L).

4. Procédé selon la revendication 1, l'envoi du deuxième bloc de données (C) étant exécuté automatiquement par le deuxième abonné (T3) lorsqu'il établit la communication spontanée (P2P) avec le premier abonné (T2).

5. Procédé selon l'une des revendications précédentes, comprenant la phase supplémentaire du démarrage d'une installation ou d'une initialisation lorsque l'un des plusieurs abonnés dispose d'un ensemble complet de blocs de données (A, B, C).

6. Procédé selon l'une des revendications précédentes, la communication spontanée (P2P) étant établie au moyen de Bluetooth ou WLAN.

7. Réseau de données comprenant
- au moins un premier (T2) et un deuxième (T3) abonnés capables de former un réseau ad hoc et
- un dispositif central (O) pour la distribution d'un logiciel et/ou de données de configuration,
**caractérisé en ce que**
- le logiciel et/ou les données de configuration à distribuer se présentent sous la forme d'au moins un premier (B) et un deuxième (C) blocs de données,
- une liste (L) reflétant un ensemble complet de blocs de données (A, B, C) résultant de la division est établie dans le dispositif central (O),
- le premier bloc de données (B) avec la liste (L) peut être transmis du dispositif central (O) au premier (T2) abonné et le deuxième bloc de données (C) avec la liste (L) peut être transmis du dispositif central (O) au deuxième abonné (T3),
- une communication spontanée (P2P) peut être établie entre le premier et le deuxième abonnés (T2, T3) et
- le deuxième bloc de données (C) avec la liste (L) peut être transmis directement du deuxième abonné (T3) au premier abonné (T2).

8. Réseau de données selon la revendication 7, le deuxième bloc de données (C) pouvant être transmis du deuxième abonné (T3) au premier abonné (T2) sur demande de celui-ci.

9. Réseau de données selon la revendication 8, la liste (L) pouvant être exploitée dans le premier abonné (T2) pour la demande.

10. Réseau de données selon la revendication 7, le deuxième bloc de données (C) pouvant être transmis automatiquement au premier abonné (T2) par le deuxième abonné (T3) lorsque les deux abonnés (T2, T3) établissent une communication spontanée (P2P).

11. Réseau de données selon l'une des revendications 7 à 10, une installation ou une initialisation pouvant être démarrée automatiquement dans l'un des abonnés lorsque l'abonné dispose d'un ensemble complet de blocs de données (A, B, C).

12. Réseau de données selon l'une des revendications 7 à 11, la communication spontanée (P2P) pouvant être établie entre les abonnés au moyen de Bluetooth ou WLAN.
